# EUROPEAN PATENT APPLICATION

(11) **EP 4 582 814 A1**
(43) Date of publication of application: **09.07.2025**
(21) Application number: 24220117.6
(22) Date of filing: 16.12.2024
(51) Int. Cl.: G01P 15/125, G01P 15/18, G01P 21/00

(54) **INERTIAL MEMS DEVICE COMPRISING MEMS ACCELEROMETERS HAVING DIFFERENT SENSITIVITY SCALES**

(30) Priority: 05.01.2024 IT 202400000144
(71) Applicant: STMicroelectronics International N.V., 1228 Geneva Plan-les-Ouates (CH)
(72) Inventor: MANCA, Nicolo', 10154 Torino (IT); RIZZINI, Francesco, 25050 Passirano (BS) (IT); LUBERTO, Alessandro, 20141 Milano (IT); DALL'OGLIO, Cristian, 9301 Niscemi (CL) (IT)
(74) Representative: Studio Torta S.p.A.

(57) **Abstract**

Inertial MEMS device having a plurality of inertial sensors (1-3) integrated in a die (10) of semiconductor material, the inertial sensors (1-3) being mutually arranged side by side and including a triaxial gyroscope (2), a first triaxial accelerometer (3), having a first full scale, and a second triaxial accelerometer (4), having a second full scale, greater than the first full scale. The first and the second triaxial accelerometers (3, 4) are of a capacitive type and configured to receive same self-test signals. The second triaxial accelerometer (4) is configured to allow a self-test of accelerations of at least 450 mG, in particular of approximately 500 mG.

## Description

### Technical field

The present invention relates to an inertial MEMS device comprising MEMS accelerometers having different sensitivity scales.

### Background

As known, inertial sensors, such as accelerometers and gyroscopes, of a MEMS (Micro Electro-Mechanical Systems) type are widely used thanks to their small dimensions and high detection sensitivity.

Inertial MEMS sensors are integrated into a wide range of electronic apparatuses, such as wearable devices, smartphones, laptops, etc.

Common applications of such inertial sensors include monitoring shocks, for example to sense car accidents or possible falls to the ground of a person; sensing gestures by a user, such as a rotation of a smartphone screen or a specific type of user touch; and using them as bone conductivity detectors, for example as a microphone in True Wireless Stereo (TWS) earphones.

With particular reference to MEMS accelerometers, low-G accelerometers are known, for sensing reduced accelerations, for example used for gesture sensing, touch sensing and other typical functions of wearable apparatuses, which have a lower Full Scale Range (FSR), for example equal to 16 G or 32 G (where G represents the Earth's gravity of about 9.81 m/s²), and high-G sensors, for sensing higher accelerations, for example used for car accident sensing, for fall sensing, which have a higher full scale, for example equal to 128 G.

It is also known that the full scale and the measurement sensitivity (i.e. the displacement of the movable sensing structure of the inertial sensor per applied acceleration unit) are inversely proportional to each other. Therefore, high-G sensors have a high full scale but low sensitivity and low-G sensors have a low full scale but high sensitivity.

Furthermore, generally, low-G accelerometers are characterized by a lower sense mode resonance frequency, while high-G accelerometers are characterized by a higher frequency.

In some applications, it is desired to have both functions and sensitivities. In this case, generally, two movable sensing structures are integrated into different dice and packaged in a same MEMS device, so as to sense both low accelerations and high accelerations.

To reduce the overall dimensions, it has already been proposed to integrate the two structures (low- and high-G structures) in a same die. However, the simultaneous presence in the same integrated MEMS device of two different movable sensing structures with different characteristics entails a certain number of disadvantages, including for example the need to have dedicated circuitries and control units (for example, ASIC, PCB or CPU, etc.) which run dedicated processes, with corresponding higher costs and large dimensions, or to provide single circuitries and control units, but having architectures that are rather complex and operating at high consumptions.

For example, recent consumer-type applications provide for performing periodic functionality tests during operation (so-called "self-test"), to checks correct operation or "sanity" of the associated inertial sensor.

Sanity tests consist in applying a simulated acceleration, of known magnitude, to the structure under test and measuring the resulting displacement. To this end, the control unit applies a known electrostatic force to the respective structure under test, providing a stimulus (for example voltage steps at a predetermined frequency) of suitable value.

Due to the different sensitivity levels, a same sanity test cannot be performed on inertial sensors having different sensitivity; in fact, a stimulus suitable for a low-G inertial sensor is too low and gives rise to a response that is too low for a high-G inertial sensor. A possible single control unit should therefore provide for different procedures for different inertial sensors.

The aim of the present invention is to develop a solution that overcomes the drawbacks of the prior art and in particular allows a same test to be performed on inertial sensors having different sensitivity.

### Summary

According to the present invention, an inertial MEMS device is provided, as defined in the attached claims.

### Brief Description of the Drawings

For a better understanding of the present invention, an embodiment thereof is now described, purely by way of nonlimiting example, with reference to the attached drawings, wherein:
- Figure 1 is a schematic block diagram of the layout of the present inertial device comprising a plurality of inertial sensors;
- Figure 2 is a perspective view of the inertial device of Figure 1, mounted on a support, before packaging;
- Figure 3 is a top view of an inertial sensor of the inertial device of Figure 1;
- Figure 4 is a top view, on an enlarged scale, of an elastic element of the inertial sensor of Figure 3;
- Figure 5 is a top view, on an enlarged scale, of a sensing capacitive pair of the inertial sensor of Figure 3;
- Figure 6 is a cross-section, taken along section line VI-VI of Figure 5, of the sensing capacitive pair of Figure 5;
- Figure 7 is a top view, on an enlarged scale, of a detail of the inertial sensor of Figure 3;
- Figure 8 is a cross-section of the detail, taken along section line VIII-VIII, of Figure 7;
- Figure 9 is a top view of another inertial sensor of the inertial device of Figure 1;
- Figure 10 is a cross-section of a detail of the inertial sensor of Figure 9, taken along section line X-X of Figure 7 and on an enlarged scale;
- Figure 11 is a top view of another detail of the inertial sensor of Figure 9; and
- Figure 12 shows biasing voltage trends of the inertial sensors of Figures 3-11.

### Description of Embodiments

The following description refers to the arrangement shown; consequently, expressions such as "above", "below", "upper", "lower", "right", "left" relate to the attached Figures and are not to be interpreted in a limiting manner.

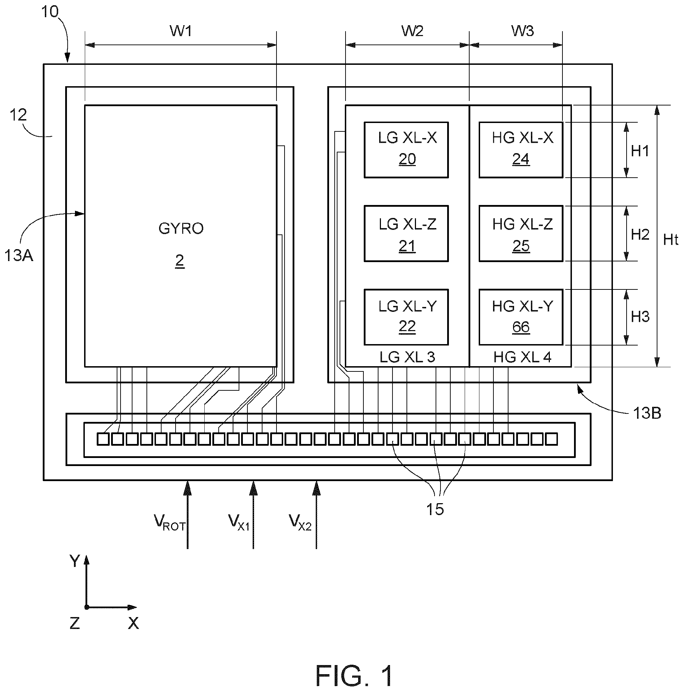

Figure 1 shows an inertial device 1 comprising a triaxial gyroscope (GYRO 2), a first triaxial accelerometer 3, having high sensitivity and low full scale, indicated in Figure 1 by LG XL 3, and a second triaxial accelerometer 4, having lower sensitivity and high full scale, indicated in Figure 1 by HG XL 4.

As is known, the full-scale range may be defined as the maximum acceleration value (in absolute value) detectable by an inertial sensor (here MEMS accelerometers). For example, an accelerometer having a full scale of 100 G (wherein G is the gravity equal to 9.81 m/s²) may be able to sense accelerations having maximum amplitude equal to -100 G and +100 G.

The triaxial gyroscope 2, the first triaxial accelerometer 3 and the second triaxial accelerometer 4 are hereinafter also referred to as inertial sensors 2-4.

The triaxial gyroscope 2, the first triaxial accelerometer 3 and the second triaxial accelerometer 4 are integrated into a same die 10, in an adjacent position, as described below, and have main extension in a plane parallel to a plane XY of a Cartesian coordinate system XYZ having a first Cartesian axis X, a second Cartesian axis Y and a third Cartesian axis Z (thickness direction of the die 10 and of the inertial sensors 2-4).

According to one aspect of the present disclosure, the inertial device 1 may be tested during operation (self-test procedure) using a single test procedure activated by a control unit (here an external control unit), for example an ASIC (Application Specific Integrated Circuit), associated both with the first triaxial accelerometer 3 and with the second triaxial accelerometer 4. In particular, the self-test procedure provides for applying same test voltages (having a predetermined value and frequency) to the triaxial accelerometers 3, 4 and sensing the obtained displacement.

Furthermore, the present inertial device 1 has been designed so that the reading value of the self-test procedure of the second triaxial accelerometer 4 (high full-scale accelerometer) is at least 450 mG, in particular approximately of 500 mG.

To this end, the layout and the structural characteristics of the inertial device 1, and in particular those of the second triaxial accelerometer 4, have been specifically studied, as described in detail hereinbelow.

With reference to Figure 1, the triaxial gyroscope 2 has a known structure, for example of the type described in Italian patent application 102021000020504, corresponding to US patent application US 4,124,827 and is arranged in a first half of a die 10.

The first triaxial accelerometer 3 and the second triaxial accelerometer 4 are arranged in a second half of the die 10, that has an area slightly larger than the first half.

In detail, the triaxial gyroscope 2, the first triaxial accelerometer 3 and the second triaxial accelerometer 4 all have a rectangular area, are arranged side by side in the direction of the first Cartesian axis X and have approximately a same height Ht (measured in a direction parallel to the second Cartesian axis Y) and an own width, indicated by W1, W2, W3, respectively, measured in a direction parallel to the first Cartesian axis X.

The height Ht of the inertial sensors 2-3 is greater than the widths W1, W2, W3.

For example, the height Ht of the inertial sensors 2-3 is variable between 0.9 and 1.1 mm, in particular between 0.94 and 1 mm; the width W1 of the triaxial gyroscope 2 is comprised between 560 and 600 µm; the width W2 of the first triaxial accelerometer 3 is comprised between 378 and 405 µm; the width W3 of the second triaxial accelerometer 4 is comprised between 350 and 370 µm.

In particular, the ratio between the widths W2 and W3 (W2:W3) may be approximately of 2.7:2.

The ratio between the widths W1 and W3 (W1:W3) may be approximately of 4:2.

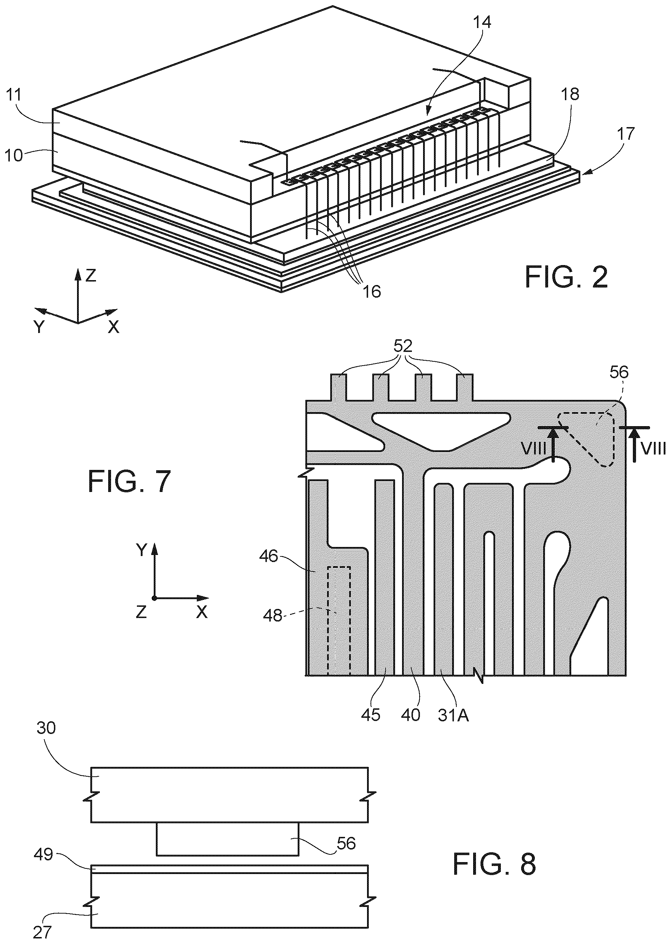

The die 10 is bonded to a cap 11, visible in Figure 2, through adhesive regions 12, shown in Figure 1. Material may be removed from the cap 11 so as to define two separate chambers, represented schematically and forming a first chamber 13A and a second chamber 13B.

The chambers 13A and 13B are intended to accommodate the triaxial gyroscope 2 and, respectively, the triaxial accelerometers 3, 4.

Furthermore, the cap 11 here has a recess 14 (Figure 2) extending parallel to a plane XY of the Cartesian system XYZ, to expose contact pads 15 (Figure 1) formed on the die 10, in proximity to one of its side.

For example, some of the contact pads 15 are intended to receive biasing voltages, in particular self-test voltages V_{ROT}, V_{X1}, V_{X2} described below, provided to both triaxial accelerometers 3, 4.

The contact pads 15 are also intended to provide the measurement values generated by the triaxial accelerometers 3, 4; to send a separate self-test signal to the triaxial gyroscope 2 and receive the corresponding measurement values; as well as to provide power supply for the inertial sensors 2-4.

As shown in Figure 2, wires 16 connect the contact pads 15 to a control unit 18, for example an ASIC, connected in turn to a support 17 for surface mounting, for example of a LGA (Land Grid Array) type.

The set formed by the die 10, the cap 11, the control unit 18 and the support 17 is packaged in a known manner, not shown, so as to form a packaged device having standard dimensions, for example 3.0 x 2.5 x 0.86 mm³.

Returning to Figure 1, the first triaxial accelerometer 3 is arranged between the triaxial gyroscope 2 and the second triaxial accelerometer 4 and comprises a first LG uniaxial accelerometer 20, a second LG uniaxial accelerometer 21 and a third LG uniaxial accelerometer 22.

In the embodiment shown, the first, second and third LG uniaxial accelerometers 20-22 are configured so as to have high sensitivity and low full scale, to sense non-high amplitude accelerations (for example with a full scale lower than 100 G).

The first, second and third LG uniaxial accelerometers 20-22 are arranged next to each other, side by side and contiguous in a direction parallel to the second Cartesian axis Y, and are intended to sense, respectively, accelerations in a first direction in the main extension plane of the inertial device 1, here parallel to the first Cartesian axis X (hereinafter also referred to as LG-X accelerometer 20), accelerations in a "out-of-plane" direction transverse to the main extension plane of the inertial device 1, here parallel to the third Cartesian axis Z (hereinafter also referred to as LG-Z accelerometer 21); and accelerations in a second direction in the main extension plane of the inertial device 1, here parallel to the second Cartesian axis Y (hereinafter also referred to as LG-Y accelerometer 22).

The second triaxial accelerometer 4 comprises a first HG uniaxial accelerometer 24, a second HG uniaxial accelerometer 25 and a third HG uniaxial accelerometer 26.

The HG uniaxial accelerometers 24-26 are configured so as to have a high full scale and lower sensitivity, to sense accelerations of greater amplitude (for example with full scale greater than 100 G, for example 256 G or even 700 G).

The HG uniaxial accelerometers 24-26 are arranged here similarly to the LG uniaxial accelerometers 20-22, i.e. they are arranged side by side and contiguous in a direction parallel to the second Cartesian axis Y, and are intended to respectively sense accelerations parallel to the first Cartesian axis X (hereinafter also referred to as HG-X accelerometer 24), accelerations parallel to the third Cartesian axis Z (hereinafter also referred to as HG-Z accelerometer 25) and accelerations parallel to the second Cartesian axis Y (hereinafter also referred to as HG-Y accelerometer 26).

The HG-X accelerometer 24 has a height H1 comprised between 280 and 300 µm; the HG-Z accelerometer 25 has a height H2 comprised between 420 and 440 µm and the HG-Y accelerometer 26 has a height H3 comprised between 310 and 330 µm, wherein H1, H2, H3 are measured in a direction parallel to the second Cartesian axis Y.

Furthermore, the HG-X accelerometer 24 has a width (not represented in Figure 1, but measured in the direction of the widths W1-W3) comprised between 310 and 330 µm; the HG-Z accelerometer 25 has a width comprised between 350 and 370 µm and the HG-Y accelerometer 26 has a width comprised between 280 and 300 µm.

The LG uniaxial accelerometers 20-22 and the HG uniaxial accelerometers 24-26 are of a capacitive type, and have a similar structure.

In particular, the HG uniaxial accelerometers 24-26 will be described hereinbelow, configured to allow self-testing with a minimum sensing of 500 mG using a same procedure and voltages used for the corresponding LG uniaxial accelerometers 20-22.

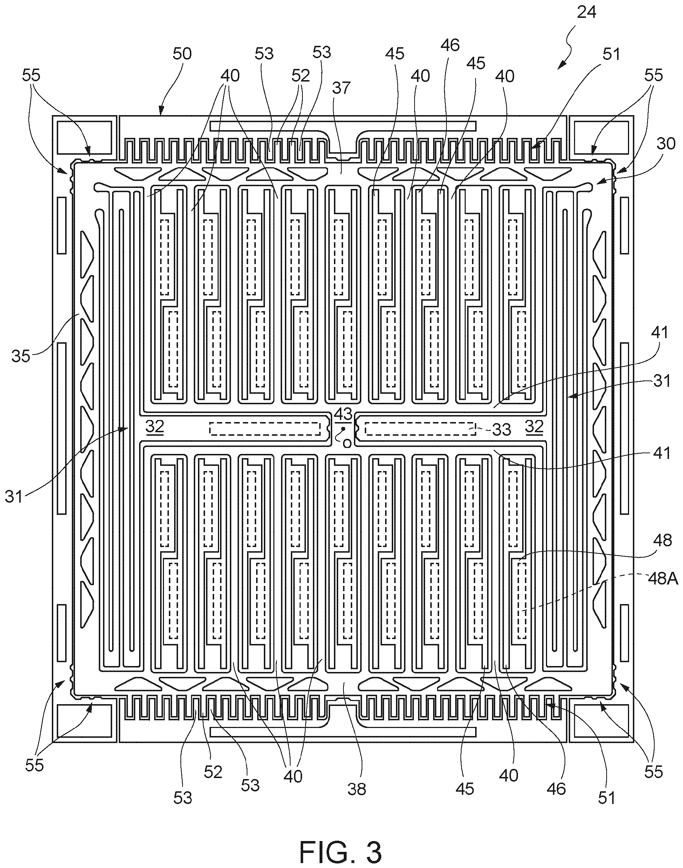

Figure 3 shows, in top view, the layout of the HG-X accelerometer 24; the HG-Y accelerometer 26 has the same layout and is rotated by 90° with respect to the HG-X accelerometer 24, so it is described only for the characteristics (orientation) in which it differs from the HG-X accelerometer 24.

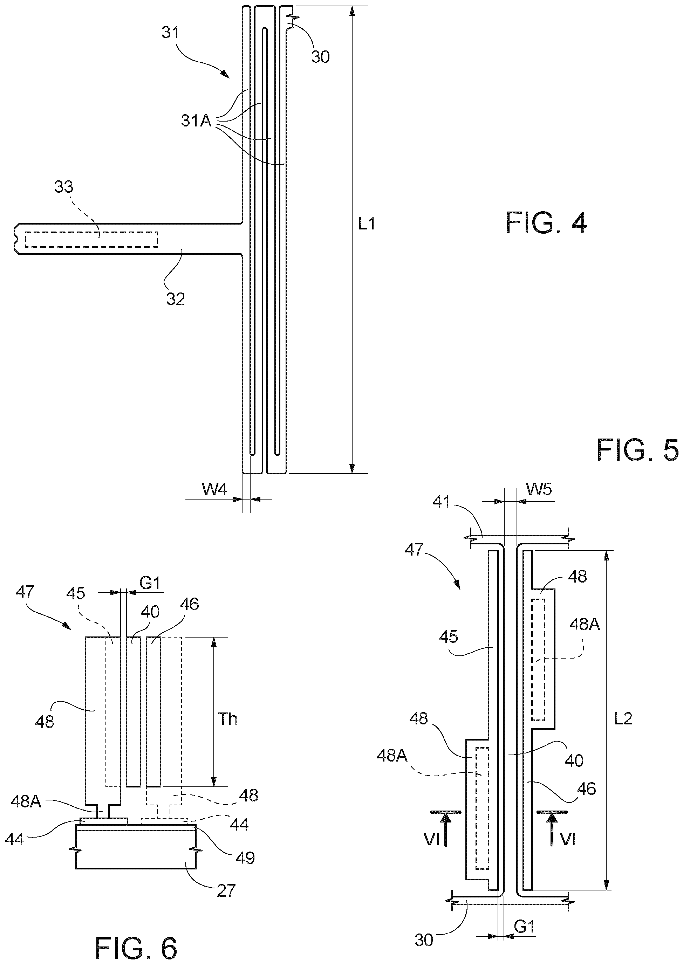

The HG-X and HG-Y accelerometers 24, 26 are formed in a same silicon layer and extend above a substrate not visible in Figure 3, but shown in Figure 6 and indicated by 27.

Both HG-X and HG-Y accelerometers 24, 26 are formed by structures having parallel plates, facing the sensing direction (X for the HG-X accelerometer 24 and Y for the HG-Y accelerometer 26) and extending in planes (plane YZ for the HG-X accelerometer 24 and plane XZ for the HG-Y accelerometer 26) perpendicular to the respective sensing direction.

The HG-X accelerometer 24 comprises a rotor 30 having the shape of a rectangular frame formed by two first sides 35, 36, opposite to each other and extending in a direction transverse to the sensing direction (Y for the HG-X accelerometer 24 and X for the HG-Y accelerometer 26), and by two second sides 37, 38, opposite to each other and transverse to the first sides 35, 36 of the rotor 30.

The rotor carries movable electrodes 40 and is supported, through a pair of first elastic elements 31 and a pair of arms 32, by anchors 33, shown in dashed lines and configured to suspend the rotor 30 above the substrate 27 (Figure 6).

The anchors 33 are arranged in proximity to a barycenter O of the HG-X accelerometer 24 and are integral with a first end of the arms 32.

The arms 32 extend parallel to the sensing direction (X for the HG-X accelerometer 24 and Y for the HG-Y accelerometer 26) between the respective anchors 33 and the respective first elastic elements 31, to which they are coupled at the respective second ends.

The first elastic elements 31 (see also Figure 4) are of a folded type, are each coupled to a respective first side 35, 36 of the rotor 30 and are configured to allow a movement of the rotor 30 in the sensing direction (X for the HG-X accelerometer 24 and Y for the HG-Y accelerometer 26).

The first elastic elements 31 are formed by a plurality of sections 31A extending parallel to the second Cartesian axis Y (to the first Cartesian axis X for the HG-Y accelerometer 26). The sections 31A may be in a variable number between 3 and 5; in the embodiment shown, the first elastic elements 31 comprise four sections 31A.

In particular, the sections 31A of the first elastic elements 31 have a width W4 comprised between 2.9 µm and 3.3 µm and a length L1 comprised between 230 and 250 µm.

In this manner, the first elastic elements 31 have an elastic constant k comprised between 3.5 and 7.2 N/m.

The movable electrodes 40 extend from the second sides 37, 38 of the rotor 30, transversely thereto, in particular perpendicular thereto, towards the inside of the rotor 30 (towards the arms 32).

In detail, the movable electrodes 40 are coupled to the respective second side 37, 38 of the rotor 30 at one own first end and to connection elements 41 at one own second end.

The connection elements 41 have an elongated shape, extend parallel and in proximity to the arms 32, on opposite sides thereof, and are mutually coupled in a central position, overlying the barycenter O, by a connecting section 43, extending between the arms 32.

The connection elements 41 and the connecting section 43 are suspended on the substrate 27 (Figure 6) and movable together with the rotor 30 and the movable electrodes 40.

First and second fixed electrodes 45, 46 extend inside the frame defined by the rotor 30, facing the movable electrodes 40; in particular, as shown in Figures 5 and 6, each movable electrode 40 faces on one side a first fixed electrode 45 and, on an opposite side, a second fixed electrode 46.

Each movable electrode 40, the respective first fixed electrode 45 and the respective second fixed electrode 46 form a sensing pair 47; a first plurality of sensing pairs 47 extends on one side of the arms 32 (for example, at the bottom in Figure 3) and a second plurality of sensing pairs 47 extends on the opposite side of the arms 32 (in the example, at the top in Figure 3).

The fixed electrodes 45, 46 have anchoring portions 48, wider, which end with anchoring ends 48A anchored to the substrate 27 (Figure 6), shown in dashed lines in Figure 5 and visible in Figure 6.

The anchoring ends 48A are in electrical connection with respective conductive regions 44, extending on an insulating layer 49 overlying the substrate 27.

As shown in Figure 5, the anchoring portions 48 extend (in the main extension or length direction of the fixed electrodes 45, 46, thus parallel to the second Cartesian axis Y for the HG-X accelerometer 24, and to the first Cartesian axis X for the HG-Y accelerometer 26) for about half the length of the respective first and second fixed electrodes 45, 46, respectively in proximity to the connection elements 41 and the rotor 30, in an eccentric position.

In practice, the anchoring portion 48 of a first fixed electrode 45 of a sensing pair 47 is arranged at the side, in the direction of the second Cartesian axis Y, of the anchoring portion 48 of a second fixed electrode 46 of an adjacent sensing pair 47 and faces this second fixed electrode 46 of the adjacent sensing pair 47. In other words, the anchoring portions 48 of each sensing pair 47 are arranged offset along the second Cartesian axis Y and project in opposite directions, along the first Cartesian axis X.

This structure is also present in the HG-Y accelerometer 26, with axes X and Y exchanged.

The anchoring portions 48 of the plurality of sensing pairs 47 are arranged in a non-symmetrical manner with respect to the arms 32; instead, the arrangement of the fixed electrodes 45, 46 and the respective anchoring portions 48 of a plurality of sensing pairs 47 (for example, the one at the top in Figure 3) is obtainable by translating, along the second Cartesian axis Y, the other plurality of sensing pairs 47 (in the example, the one at the bottom in Figure 3); similarly, along the first axis X for the HG-Y accelerometer 26.

The fixed electrodes 45, 46 have a length L2 comprised between 105 µm and 125 µm and their thickness Th (corresponding to the thickness of the epitaxial layer accommodating the HG-X accelerometer 24 and the HG-Y accelerometer 26, Figure 6) is comprised between 20 and 30 µm.

Furthermore, in each sensing pair 47, the gap G1 between each movable electrode 40 and the respective fixed electrodes 45, 45, at rest, is comprised between 2.3 and 2.5 µm.

In this manner, the capacitance C0 of each sensing pair 47 is comprised between 235 and 330 fF.

Overall, the HG-X accelerometer 24 and the HG-Y accelerometer 26 have a mass comprised between 1.5 and 1.7 µg.

Returning to Figure 3, the rotor 30 extends inside a fixed frame 50 surrounding it and forming damping and stopping structures therewith.

In particular, Figure 3 shows two damping structures 51 formed between the second sides 37, 38 of the rotor 30 and respective sides, facing them, of the fixed frame 50.

The damping structures 51 comprise first projections 52 integral with the rotor 30, projecting from the second sides 37, 38 of the rotor 30, extending towards the facing sides of the fixed frame 50, and interdigitated with second projections 53 extending from the fixed frame 50 towards the second sides 37, 38 of the rotor 30. The first and the second projections 52, 53 extend perpendicular to the sensing direction (and therefore parallel to the second Cartesian axis Y for the HG-X accelerometer 24 and to the first Cartesian axis for the HG-Y accelerometer 26).

The damping structures 51 allow damping of the movement of the rotor 30 in its sensing direction (X for the HG-X accelerometer 24, Y for the HG-Y accelerometer 26).

First stoppers 55 are also formed on the internal corners of the fixed frame 50 and are intended to limit the movement of the rotor 30 in the main extension plane (parallel to the Cartesian plane XY).

The rotor 30 also has second stoppers 56 acting along the third Cartesian axis Z and having the purpose of increasing the mechanical robustness of the HG-X and HG-Y accelerometers 24, 26 in such direction in the event of impacts and shocks.

The second stoppers 56 are shown in Figures 7 and 8 and comprise triangular projections (indicated with the same reference number 56) extending from the lower face of the rotor 30, facing the substrate 27 (Figure 8).

For example, the triangular projections 56 have two sides parallel to the first and, respectively, the second Cartesian axes X, Y.

In the event of a shock, the triangular projections 56 may hit the substrate 27 and undergo a pressure, which, in the event of violent shocks, might lead to their breakdown. By virtue of their shape, the triangular projections 56 allow the unit pressure to be reduced from 1/46 Mpa of similar known (bar) structures to a much lower value, here 1/64 Mpa. In this manner, the impact pressure is greatly reduced, decreasing the risk of breakdown with respect to bar projections.

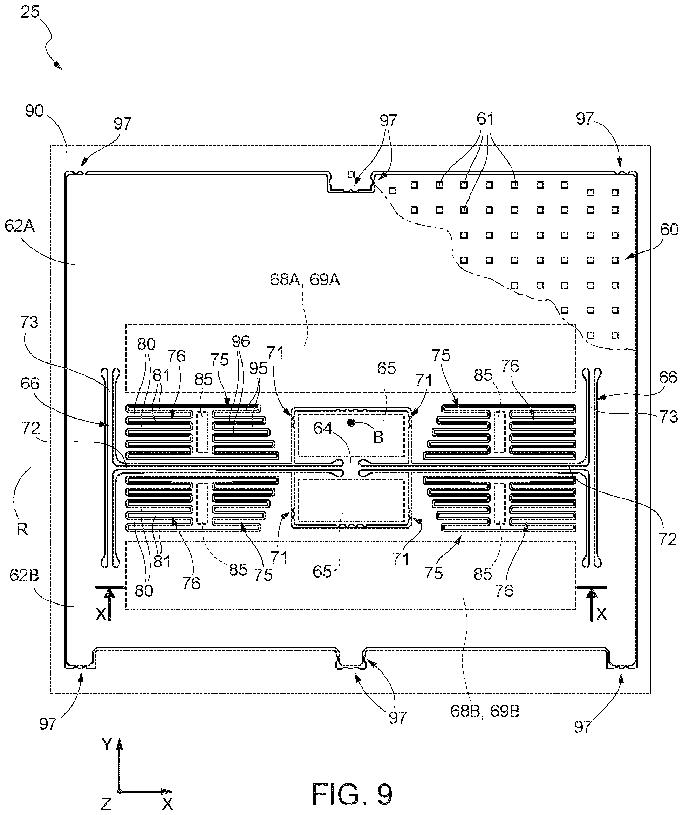

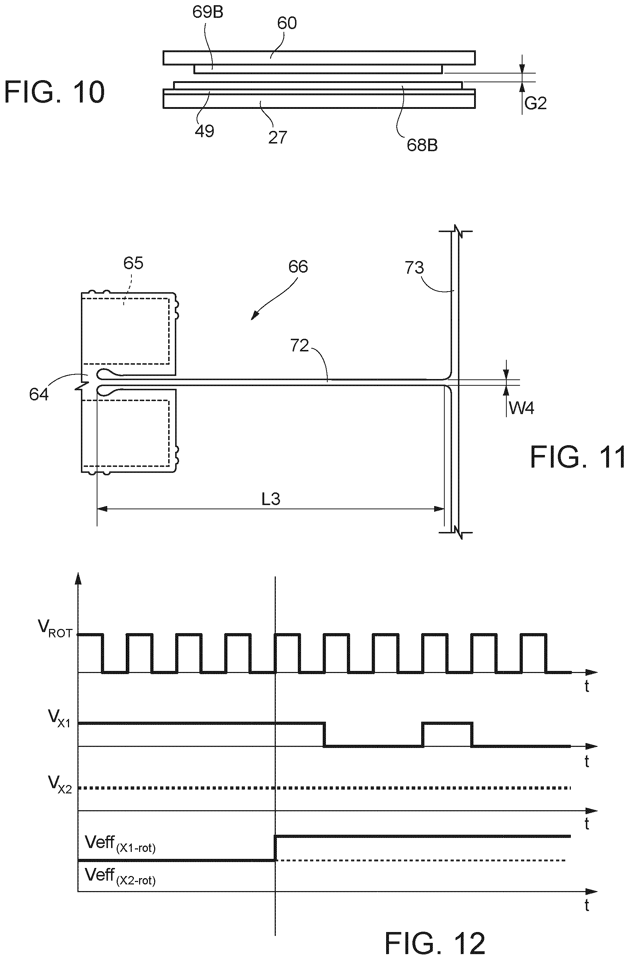

Figure 9 shows, in top view, the layout of the HG-Z accelerometer 25. Figures 10 and 11 show enlarged details of the HG-Z accelerometer 25.

The HG-Z accelerometer 25 is of the teeter-totter type and comprises a single movable mass 60 formed in the same layer as the rotors 30 of the HG-X and HG-Y accelerometers 24, 26 (Figure 3).

The movable mass 60 has a barycenter B and is coupled to the substrate 27 so as to rotate around a rotation axis R extending in the main extension plane of the inertial device 1 and at a distance from the barycenter B.

In this manner, the parts of the movable mass 60 arranged on opposite sides of the rotation axis R may move out-of-plane (along the third Cartesian axis Z), in opposite directions, in response to an external acceleration having a component parallel to the third Cartesian axis Z, as described in detail hereinbelow.

The movable mass 60 is generally provided with a series of through holes 61 which occupy its entire area, as shown exemplarily only in the top right corner in Figure 9.

The HG-Z accelerometer 25 comprises a first and a second fixed electrode 68A, 68B, indicated with a dashed line in Figure 9, extending on the substrate 27.

Movable electrodes 69A, 69B extend below the movable mass 60, facing the fixed electrodes 68A, 68B and at a distance G2 therefrom, as shown in the detail of Figure 9.

The movable electrodes 69A, 69B and the fixed electrodes 68A, 68B have approximately equal dimensions. For example, the movable electrodes 69A, 69B and the fixed electrodes 68A, 68B have an area comprised between 31·10³ and 33 µm².

The distance G2, at rest, between the movable electrodes 69A, 69B and the fixed electrodes 68A, 68B (Figure 10) is for example comprised between 1 and 1.2 µm.

The movable electrodes 69A, 69B and the fixed electrodes 68A, 68B are capacitively coupled, so as to form capacitive elements having capacitance C_{O2} comprised between 205 and 340 fF.

The HG-Z accelerometer 25 also comprises a central anchoring region 64 attached to the substrate 27 through pillars 65 (indicated by dashed lines in Figure 9).

Second elastic elements (so-called springs) 66 extend between the anchoring region 64 and the movable mass 60 and keep the movable mass 60 suspended on the substrate 27.

The second elastic elements 66 are torsional elastic elements configured to allow a rotation of the sensing mass 60 around the rotation axis R.

In the arrangement of Figure 9, the rotation axis R is parallel to the first axis X.

The sensing mass 60 has a major portion 62A extending from a first side of the rotation axis R along the second Cartesian axis Y (at the top in Figure 9), and a minor portion 62B extending from a second side, opposite to the first side, of the rotation axis R (at the bottom in Figure 9) .

Consequently, the major portion 62A of the sensing mass 60 has a greater mass than the minor portion 62B and the barycenter B of the movable mass 60 is arranged on the first side of the rotation axis R.

The major portion 62A of the sensing mass 60 faces the first sensing electrode 68A. The minor portion 62B of the sensing mass 60 faces the second sensing electrode 68B.

The central anchoring region 64 may form projecting portions 71 which extend, along the first Cartesian axis X, towards the movable mass 60 and form stop elements for the movable mass 60 along the first Cartesian axis X.

However, the stop elements may be formed on the movable mass 60.

In this embodiment, the second elastic elements 66 have a T-shape. In detail, each second elastic elements66 has a longitudinal portion 72, which extends parallel to the first Cartesian axis X from the anchoring region 64, and a transverse portion 73 which extends transversely to the respective longitudinal portion 72.

The transverse portion 73 may, however, be missing and the second elastic elements 66 may be formed by the sole longitudinal portions 72 which directly couple the movable mass 60 to the anchoring region 64.

The longitudinal portions 72 extend along the rotation axis R.

The transverse portions 73 extend parallel to the second Cartesian axis Y.

The transverse portion 73 of each second elastic element 66 is coupled to one end of the respective longitudinal portion 72.

The movable mass 60 is coupled to the transverse portions 73 of the second elastic elements 66, in particular to the ends of the transverse portions 73.

The longitudinal portions 72 of the second elastic elements 66 have a length L3 comprised between 155 and 175 µm and a width W4 comprised between 3.2 and 3.6 µm (Figure 11).

In this manner, the second elastic elements 66 have an elastic constant k comprised between 198·10⁻⁹ and 360 ·10⁻⁹ N/m.

Returning to Figure 9, the HG-Z accelerometer 25 further comprises four modified damping structures 75 and four additional damping structures 76 configured to damp in-plane movements (along the first and/or the second Cartesian axis X, Y) of the movable mass 60.

Each modified damping structure 75 comprises a plurality of movable fingers (or protrusions) 80, integral with the movable mass 60, and a plurality of fixed fingers (or protrusions) 81 integral with the substrate 27 and interdigitated with the movable fingers 80.

The movable fingers 80 and the fixed fingers 81 extend parallel to the first Cartesian axis X; the fixed fingers 81 extend from respective finger anchoring regions 85.

The movable fingers 80 and the fixed fingers 81 have a variable length along the first axis X. This may allow the trade-off between damping efficiency and area occupation of the damping structures to be optimized and, at the same time, a high mechanical robustness of the HG-Z accelerometer 25 to be ensured.

Each additional damping structure 76 comprises respective movable fingers 95 and respective fixed fingers 96 interdigitated with each other.

The fixed fingers 96 of the additional damping structures 76 extend from the anchoring region 85 of the respective modified damping structure 75 in the opposite direction with respect to the fixed fingers 81, i.e. towards the transverse portion 73 of the respective second elastic element 66.

In the embodiment shown, the fixed fingers 96 and the movable fingers 95 have constant length along the first Cartesian axis X. This may allow maximization of the damping effectiveness.

The HG-Z accelerometer 25 also has an own fixed frame 90 which surrounds at a distance the movable mass 60 and forms therewith bumper regions 97 formed by a plurality of portions projecting in the direction of the first and the second Cartesian axes X, Y and operate as in-plane stop regions of the movable mass 60 to limit any rotations of the same movable mass 60 in the main extension plane.

Also in this case, the impact regions 97 might be formed on the movable mass 60.

Overall, the HG-Z accelerometer 25 has a mass comprised between 8.1 and 8.9 µg.

The HG-X, HG-Y and HG-Z accelerometers 24, 26, 25 (forming the second HG XL triaxial accelerometer 4) are arranged, as indicated above, in a same chamber (second chamber 13B in Figure 1) with the first LG XL triaxial accelerometer 3.

In particular, the second chamber 13B is formed by bonding the cap 11 to the die 10. In particular, bonding is carried out at a bonding pressure comprised between 190 and 210 mbar, using a gas mixture comprising 2% by volume of argon Ar and 98% by volume of nitrogen N₂.

With the sizing indicated above, the HG-X and HG-Y accelerometers 24, 26 are capable of carrying out a self-test for simulated accelerations between 500 and 1500 mG (wherein G represents the Earth's gravity value, equal to about 9.81 m/s²). Furthermore, they have the following characteristics:
bandwidth comprised between 9.5 and 11.5 kHz;
resonance frequency comprised between 7.8 and 1.5 kHz;
quality factor Q comprised between 0.6 and 1.1;
sensitivity comprised between 0.51 and 0.57 fF/g; and
Brownian noise density comprised between 72 and 100 µg/Hz^{0.5}.
Furthermore, the HG-Z accelerometer 25 has a self-test full-scale comprised between 500 and 1500 mG.
Furthermore, it has the following characteristics:
   bandwidth comprised between 4.3 and 8 kHz;
   resonance frequency comprised between 6.5 and 8.5 kHz;
   quality factor Q comprised between 0.4 and 0.8;
   sensitivity comprised between 0.38 and 0.91 fF/g; and
   Brownian noise density comprised between 77 and 116 µg/Hz^{0.5}.

As indicated above, the self-test process for the HG uniaxial accelerometers 24-26 may be performed in a known manner, with the same values and modes used for the LG uniaxial accelerometers 20-22.

In detail, with reference to Figure 12, the self-test procedure (shown on the right) may provide for applying a square-wave rotor voltage V_{ROT} at a first frequency to the movable electrodes (40 for the HG-X and HG-Y accelerometers 24, 26, and 69A, 69B for the HG-Z accelerometer 25); applying a first square-wave stator voltage V_{X1} at a second frequency, lower than the first frequency, to a driven fixed electrode (for example the first fixed electrode 45 of the HG-X and HG-Y accelerometers 24, 26, and the first fixed electrode 68A of the HG-Z accelerometer 25); and applying a second direct stator voltage V_{X2} to the non-driven fixed electrode (for example the second fixed electrode 46 of the HG-X and HG-Y accelerometers 24, 26, and the second fixed electrode 68B of the HG-Z accelerometer 25).

Figure 12 also shows, on the top left, the trend of the voltages V_{ROT}, V_{X1} and V_{X2} in the operating condition of the inertial device 1; at the bottom, the effective value Veff (_{X1-rot}) of the voltage difference between the driven fixed electrode 45, 68A and the movable electrode 40, 69A; and the effective value Veff (_{X2-rot}) between the non-driven fixed electrode 46, 68B and the movable electrode 40, 69A. For example, the effective value Veff (_{X1-rot}) may be equal to 0.7 V and the effective value Veff(_{X2-rot}) may be equal to 0.9 V.

In operating condition, the first triaxial accelerometer 3 (having low G) has a minimum full scale of 16 G and the second triaxial accelerometer 4 (having high G) has a minimum full scale of 256 G.

The present inertial device 1, by virtue of its layout and the discussed dimensional characteristics, allows the triaxial gyroscope 2 and the triaxial accelerometers 2, 3 to be integrated on a single die. It may also be tested in self-test condition, during operation, using same test signals for the first and the second triaxial accelerometers 3, 4, as discussed above.

The second triaxial accelerometer, despite the high full-scale value and being optimized for operation at high acceleration levels, may sense minimum accelerations of approximately 500 mG or even lower.

Finally, it is clear that modifications and variations may be made to the inertial device described and illustrated herein without thereby departing from the scope of the present invention, as defined in the attached claims.

## Claims

1. An inertial MEMS device comprising a plurality of inertial sensors (1-3) integrated in a die (10) comprising semiconductor material, the inertial sensors (1-3) being mutually arranged side by side and including a triaxial gyroscope (2), a first triaxial accelerometer (3), having a first full scale, and a second triaxial accelerometer (4), having a second full scale, greater than the first full scale, the first and the second triaxial accelerometers (3, 4) being of a capacitive type and configured to receive same self-test signals, wherein the second triaxial accelerometer (4) is configured to allow a self-test of accelerations of at least 450 mG, in particular of approximately 500 mG.

2. The inertial MEMS device according to claim 1, wherein the second triaxial accelerometer (4) comprises a first high gravity - HG - uniaxial accelerometer (24), configured to sense accelerations along a first sensing axis (X), a second HG uniaxial accelerometer (25), configured to sense accelerations along a second sensing axis (Z), transverse to the first sensing axis (X), and a third HG uniaxial accelerometer (26), configured to sense accelerations along a third sensing axis (Y), transverse to the first and the second sensing axes (X, Z), the first and the third HG uniaxial accelerometers (24, 26) having equal structure and comprising a rotor (30) carried by an anchoring structure (32, 33) through a pair of folded elastic elements (31) and a plurality of sensing capacitive pairs (47) formed by a first movable electrode (40) integral with the rotor (30) and by a pair of first fixed electrodes (45, 46) facing the first movable electrode (40) and the second HG uniaxial accelerometer (25) being of a teeter-totter type comprising at least a second movable electrode (69A, 69B) coupled to an anchoring structure (64, 65) through a pair of torsional elastic elements (66) and facing at least a second fixed electrode (68A, 68B).

3. The inertial MEMS device according to the preceding claim, wherein the first and the third HG uniaxial accelerometers (24, 26) of the second triaxial accelerometer 4 have a mass comprised between 1.5 and 1.7 µg; each capacitive pair (47) of the first and the third HG uniaxial accelerometers (24, 26) of the second triaxial accelerometer (4) has a capacitance comprised between 235 and 330 fF, each folded elastic element (31) has an elastic constant comprised between 3.5 and 7.2 N/m and each torsional elastic element (66) has an elastic constant comprised between 198·10⁻⁹ and 360 ·10⁻⁹ N/m.

4. The inertial MEMS device according to claim 2 or 3, wherein each folded elastic element (31) comprises a plurality of parallel sections (31A) in a number variable between 3 and 5.

5. The inertial MEMS device according to the preceding claim, wherein each parallel section (31A) of the plurality of parallel sections (31A) has a width comprised between 2.9 µm and 3.3 µm and a length comprised between 230 and 250 µm.

6. The inertial MEMS device according to any of claims 2-5, wherein each torsional elastic element (66) has a length comprised between 155 and 175 µm and a width comprised between 3.2 and 3.6 µm.

7. The inertial MEMS device according to any of claims 2-6, wherein each first fixed electrode (45, 46) of each capacitive pair (47) of the first and the third HG uniaxial accelerometers (24, 26) has a length (L2) comprised between 105 µm and 125 µm, thickness (Th) comprised between 20 and 30 µm and, in a rest condition of the first and the third HG uniaxial accelerometers (24, 26), it is spaced from the respective movable electrode by a distance comprised between 2.3 and 2.5 µm.

8. The inertial MEMS device according to any of claims 2-7, wherein the second HG uniaxial accelerometer (25) comprises a movable mass (60) supported by the torsional elastic elements (66) and carrying the at least one second movable electrode (69A, 69B).

9. The inertial MEMS device according to the preceding claim, wherein a distance (G2), at rest, between the at least one second movable electrode (69A, 69B) and the at least one second fixed electrode (68A, 68B) is comprised between 1 and 1.2 µm.

10. The inertial MEMS device according to any of claims 2-9, wherein the at least one second fixed electrode (68A, 68B) of the second HG uniaxial accelerometer (25) has an area comprised between 31·10³ and 33 µm².

11. The inertial MEMS device according to any of the preceding claims, wherein the triaxial gyroscope (2), the first triaxial accelerometer (3) and the second triaxial accelerometer (4) are arranged side by side, along a first width direction (X); the first triaxial accelerometer (3) and the second triaxial accelerometer (4) have approximately the same height and have widths in a 2.7:2 ratio.

12. The inertial MEMS device according to any of claims 2-11 if dependent on claim 2, wherein the first HG uniaxial accelerometer (24) of the second triaxial accelerometer (4) has a height comprised between 280 and 300 µm and a width comprised between 310 and 330 µm; the second HG uniaxial accelerometer (25) of the second triaxial accelerometer (4) has a height comprised between 420 and 440 µm and a width comprised between 350 and 370 µm; and the third HG uniaxial accelerometer (26) of the second triaxial accelerometer (4) has a height comprised between 310 and 330 µm and a width comprised between 280 and 300 µm.

13. The inertial MEMS device according to any of the preceding claims, comprising a cap (11) forming a first and a second chamber (13A, 13B), wherein the triaxial gyroscope (2) is enclosed in the first chamber (13A), and the first triaxial accelerometer (3) and the second triaxial accelerometer (4) are enclosed in the second chamber (13B); the second chamber (13B) having a bonding pressure comprised between 190 and 210 mbar, using a gas mixture comprising 2% by volume of argon Ar and 98% by volume of nitrogen N₂.

14. The inertial MEMS device according to any of claims 2-13 if dependent upon claim 2, wherein the first HG uniaxial accelerometer (24) and the third HG uniaxial accelerometer (26) have a bandwidth comprised between 9.5 and 11.5kHz; resonance frequency comprised between 7.8 and 1.5 kHz; quality factor Q comprised between 0.6 and 1.1; sensitivity comprised between 0.51 and 0.57 fF/g; and Brownian noise density comprised between 72 and 100 µg/Hz^{0.5}.

15. The inertial MEMS device according to any of claims 2-14 if dependent upon claim 2, wherein the second HG uniaxial accelerometer (25) has a bandwidth comprised between 4.3 and 8 kHz; resonance frequency comprised between 6.5 and 8.5 kHz; quality factor Q comprised between 0.4 and 0.8; sensitivity comprised between 0.38 and 0.91 fF/g; and Brownian noise density comprised between 77 and 116 µg/Hz^{0.5}.
